# EUROPÄISCHE PATENTSCHRIFT

(11) **EP 3 928 888 B1**
(45) Veröffentlichungstag und Bekanntmachung des Hinweises auf die Patenterteilung: **18.03.2026**
(21) Anmeldenummer: 21177913.7
(22) Anmeldetag: 07.06.2021
(51) Int. Cl.: B21D 43/28, B23K 37/04, B06B 1/06, B21D 43/02, B21D 43/18, B23K 26/38, B26D 7/18, G01H 1/00, G01M 7/00, G01N 29/00, B21D 28/02, H01H 35/14

(54) **VERFAHREN ZUR ENTNAHME EINES WERKSTÜCKTEILS IN EINER BEARBEITUNGSMASCHINE, DATENVERARBEITUNGSPROGRAMM SOWIE BEARBEITUNGSMASCHINE**
METHOD FOR REMOVING A WORKPIECE PART IN A PROCESSING MACHINE, DATA PROCESSING PROGRAM AND PROCESSING MACHINE
PROCÉDÉ D'ENLÈVEMENT D'UNE PIÈCE DANS UNE MACHINE OUTIL, PROGRAMME DE TRAITEMENT DES DONNÉES AINSI QUE MACHINE OUTIL

(30) Priorität: 24.06.2020 DE 102020116626
(43) Veröffentlichungstag der Anmeldung: 29.12.2021
(73) Patentinhaber: TRUMPF Werkzeugmaschinen SE + Co. KG, 71254 Ditzingen (DE)
(72) Erfinder: Busch, Marcus, 01324 Dresden (DE); Deiss, Magnus, 70372 Stuttgart (DE); Gottschalk, Tim, 71229 Leonberg (DE); Hornuf, Ingo, 01877 Bischofswerda (DE)
(74) Vertreter: Trumpf Patentabteilung

(56) Entgegenhaltungen:
- WO-A2-2004/028939
- DE-A1- 102010 039 525
- DE-A1- 102012 204 282
- DE-B3- 102016 220 459
- DE-B3- 102017 205 095
- JP-A- 2006 122 931

## Beschreibung

Die Erfindung betrifft ein Verfahren zur Entnahme eines Werkstücks aus einem Restwerkstück, welches durch trennendes Bearbeiten aus einem plattenförmigen, auf einer Werkstückauflage einer Werkzeugmaschine aufliegenden Werkstücks gebildet wird. Des Weiteren betrifft die Erfindung ein Datenverarbeitungsprogramm für eine Maschinensteuerung einer Bearbeitungsmaschine zur Entnahme eines solchen Werkstückteils. Die Erfindung betrifft eine Sensoreinrichtung zur Detektion einer Trennung des zu entnehmenden Werkstückteils aus einem Restwerkstück, welches durch eine trennende Bearbeitung aus einem plattenförmigen Werkstück hergestellt ist. Des Weiteren betrifft die Erfindung eine Bearbeitungsmaschine zur Durchführung des Verfahrens.

Aus der DE 10 2012 204 282 A1 ist eine Vorrichtung zum Prüfen von gepressten Werkstücken bekannt. Diese gepressten und endgefertigten Werkstücke werden mit einem Vibrationsmechanismus geprüft. Dabei wird das endgefertigte Werkstück mit einem Vibrationssensor, welcher ein auf das Werkstück gerichteten Infrarotlaserstrahl ausgibt, durch reflektiertes Laserlicht geprüft. Dadurch können Risse in dem endgefertigten Werkstück erfasst werden.

Aus der WO 2004/028939 A2 ist eine Greifeinrichtung für eine Bearbeitungsmaschine zur Herstellung von Werkstücken aus einem plattenförmigen Material bekannt, welche eine Detektionseinrichtung umfasst. An der Greifeinrichtung ist ein Schlagstößel vorgesehen, der auf die durch die Greifeinrichtung gehaltene Blechtafel einwirkt. Benachbart und derselben Außenseite der Blechtafel zugeordnet ist ein Schwingungsfühler vorgesehen. Durch eine Schwingungsanalyse wird erfasst, ob die als Rohmaterial ausgebildete Blechtafel als einzelne Blechtafel von der Greifeinrichtung ergriffen wird oder ob gegebenenfalls aufgrund Adhäsionskräfte eines Ölfilmes eine weitere Blechtafel an der ergriffenen Blechtafel hängt.

Aus der DE 10 2017 205 095 B1, auf welcher der Oberbegriff der Parentansprüche 1 und 12 basiert, ist eine Vorrichtung und ein Verfahren bekannt, durch welches bei der Entnahme eines durch trennende Bearbeitung aus einem plattenförmigen Werkstück hergestellten Werkstückteils aus einem Restwerkstück eine erhöhte Prozesssicherheit ermöglicht ist. Diese Vorrichtung umfasst eine Sensoreinrichtung, welche zumindest ein erstes elektrisch leitendes Kontaktelement umfasst, das mit einem Werkstückteil kontaktierbar ist sowie zumindest ein zweites elektrisch leitendes Werkstückteil umfasst, welches mit Abstand zum ersten zumindest einem ersten Kontaktelement am Werkstückteil positionierbar ist. Diese Kontaktelemente sind an einer Halteeinrichtung vorgesehen, welche zur Entnahme des Werkstückteils an dem Werkstückteil angreift. Die Kontaktelemente sind mit einer Sensoreinrichtung verbunden. Das Werkstückteil ist beispielsweise über elektrisch leitende Spannpratzen oder über eine Werkstückauflage, auf welcher das Werkstückteil und das Restwerkstück aufliegen, auf einem Referenzpotenzial gehalten. Vor der Entnahme des Werkstückteils wird geprüft, ob das Werkstückteil vollständig von dem Werkstück getrennt wurde. Sofern das Werkstückteil vollständig von dem Restwerkstück getrennt wurde, wird durch die Sensoreinrichtung ein hoher Widerstand zwischen den zwei elektrisch leitenden Kontaktelementen erfasst, die an dem zu entnehmenden Werkstückteil anliegen. Steht hingegen das Werkstückteil noch mit dem Restwerkstück in Kontakt, so entsteht bei einer zwischen den Kontaktelementen einerseits und dem Massepotenzial andererseits angelegten Spannung ein geschlossener Stromkreis, und es wird ein sehr geringer Widerstand zwischen den Kontaktelementen und dem Massepotenzial gemessen.

Bei zu bearbeitenden plattenförmigen Werkstücken, welche einen Ölfilm als Schutzfilm aufweisen oder insbesondere bei folierten Werkstücken, kann eine solche Widerstandsmessung nur schwer oder nicht durchgeführt werden.

Der Erfindung liegt die Aufgabe zugrunde, ein Verfahren bereitzustellen, bei welchem die Prozesssicherheit bei der Entnahme eines Werkstückteils aus einem Restwerkstück weiterhin verbessert wird. Des Weiteren liegt der Erfindung die Aufgabe zugrunde, ein Datenverarbeitungsprogramm zur Durchführung des Verfahrens sowie eine Sensoreinrichtung zur Durchführung des Verfahrens vorzuschlagen. Des Weiteren liegt der Erfindung die Aufgabe zugrunde, eine Bearbeitungsmaschine bereitzustellen, welche eine hohe Prozesssicherheit bei der Entnahme eines Werkstückteils aus einem Restwerkstück ermöglicht.

Diese Aufgabe wird durch ein Verfahren gelöst, bei welchem vor der Ansteuerung einer Entnahme des Werkstückteils aus dem Restwerkstück durch eine Greifeinrichtung, insbesondere durch eine Hubbewegung der Greifeinrichtung senkrecht zur Werkstückauflage, eine Sensoreinrichtung aktiviert wird, durch welche die Trennung des Werkstückteils von dem Restwerkstück mittels Körperschallsignalen detektiert wird. Diese Detektion der Trennung des Werkstückteils zum Restwerkstück mittels Körperschall ermöglicht eine zerstörungsfreie Detektion. Darüber hinaus kann dieses Verfahren auch bei nicht geölten, geölten, folierten oder beschichteten plattenförmigen Werkstücken eingesetzt werden. Auch kann eine Erkennung der vollständigen Trennung bei nicht leitfähigen Materialien ermöglicht sein.

Vorteilhafterweise ist vorgesehen, dass die Sensoreinrichtung zumindest einen Impulsgeber zur Erzeugung eines Körperschalls umfasst, durch welchen das Werkstückteil oder das Restwerkstück angeregt wird und zumindest einen Schwingungssensor zur Erfassung des Körperschalls umfasst, durch welchen ein Anteil des über den Schneidspalt übertragenen Körperschalls zum Restwerkstück oder Werkstück ermittelt wird. Somit werden die durch den Impulsgeber eingebrachten Schwingungen durch den Schwingungssensor erfasst und ausgewertet, um die vollständige Trennung, eine teilweise Trennung oder keine Trennung zu detektieren. Sofern das Werkstückteil vollständig von dem Restwerkstück getrennt ist und ein vollständig umlaufender Schneidspalt zwischen dem Werkstückteil und dem Restwerkstück gegeben ist, kann kein Körperschall übertragen werden. Dadurch kann festgestellt werden, dass weder eine Verhakung des Werkstückteils zum Restwerkstück noch ein Fehlschnitt oder eine form- oder kraftschlüssige Verbindung zwischen dem Werkstückteil und dem Restwerkstück gegeben ist, wodurch die Entnahme gestört werden könnte.

Bei einer anteiligen Übertragung des eingekoppelten Körperschalls kann erfasst werden, ob beispielsweise das Werkstückteil sich nur bereichsweise unterhalb des Restwerkstücks verschoben hat und dennoch ein Entnahmeprozess mittels einer Greifeinrichtung möglich ist. Bei einem größeren Anteil des vom Schwingungssensor erfassten Körperschalls kann dann entschieden werden, dass eine Verhakung des Werkstückteils zum Restwerkstück oder ein Fehlschnitt oder eine sonstige Störung vorliegt, so dass entweder eine Lösestrategie angesteuert wird oder die Bearbeitungsmaschine stillgesetzt und ein Signal an das Bedienpersonal ausgegeben wird.

Eine vorteilhafte Ausgestaltung des Verfahrens sieht vor, dass zunächst zumindest eine Referenzmessung bei einem vollständig getrennten Werkstück von dem Restwerkstück im Betrieb einer Bearbeitungsmaschine durchgeführt wird und aus den bei der Referenzmessung ermittelten Daten ein Referenzwert gebildet wird. Diese Bildung des Referenzwerts unter Berücksichtigung der Bearbeitungsmaschine im Betrieb weist den Vorteil auf, dass Störquellen an der Bearbeitungsmaschine oder Störquellen in einer Produktionshalle, die auf die Bearbeitungsmaschine wirken, mit erfasst und berücksichtigt werden. Dadurch können diese Störeinflüsse bei der Auswertung eliminiert werden. Zum Beispiel kann im Rahmen der Referenzmessung eine Eigenfrequenz des Systems ermittelt werden, die zur Verifizierung genutzt wird.

Des Weiteren ist bevorzugt vorgesehen, dass die Entnahme des Werkstückteils aus dem Restwerkstück, vorzugsweise durch eine Hubbewegung der Greifvorrichtung senkrecht zur Werkstückauflage nach oben, dann gestartet wird, sobald ein erfasster Messwert durch die Sensoreinrichtung gleich oder unterhalb dem Referenzwert oder einem Schwellwert zum Referenzwert liegt. Dadurch kann sichergestellt sein, dass der Entnahmeprozess ungehindert durchgeführt werden kann. Durch die Berücksichtigung eines Schwellwertes zum Referenzwert kann berücksichtigt werden, dass das Werkstückteil zwar lose in dem Restwerkstück liegt, jedoch einzelne Berührstellen aufweist. Dadurch kann ein Anteil der Körperschallsignale zwar übertragen werden, jedoch - sofern diese noch unterhalb des Schwellwerts zum Referenzwert liegen - kann immer noch eine sichere Entnahme möglich sein. Vorteilhafterweise kann die Prüfprozedur bei einzelnen Berührstellen zwischen dem Werkstückteil und dem Restwerkstück auch im leicht angehobenen Zustand des Werkstückteiles relativ zum Restwerkstück während des Heraushebens aus dem Restgitter erfolgen.

Anders verhält es sich bei Verhakungen oder einem Fehlschnitt. Bei solchen Störungen wäre ein gegenüber dem Schwellwert zum Referenzwert erhöhtes Körperschallsignal übertragen.

Des Weiteren ist bevorzugt vorgesehen, dass anstelle der Entnahme des Werkstückteils durch eine Hubbewegung der Greifvorrichtung eine Verfahrbewegung der Greifvorrichtung für eine Lösestrategie zum Lösen des Werkstückteils von dem Restwerkstück eingeleitet wird, sobald der erfasste Messwert oberhalb des Referenzwertes oder des Schwellwerts zum Referenzwert liegt. Solche Lösestrategien zur Lösung einer kraft- und/oder formschlüssigen Verbindung oder einer Verhakung zwischen dem Werkstückteil und dem Restwerkstück sind beispielsweise aus der WO 2014/023 323 A1 bekannt, auf welche voll umfänglich Bezug genommen wird.

Zur Detektion der Trennung des Werkstückteils zum Restwerkstück ist bevorzugt vorgesehen, dass durch den zumindest einen Schwingungssensor die durch den Impulsgeber angeregte Frequenz und Amplitude erfasst und ausgewertet wird. Dies ermöglicht eine einfache Ermittlung des Messwertes für die Auswertung des Zustandes Werkstückteils im Restwerkstück.

Bevorzugt ist vorgesehen, dass durch den Impulsgeber eine frequenz- und/oder pulsmodulierte Schwingung in einem Bereich von 1 bis 3 kHz in das Werkstück oder das Restwerkstück eingekoppelt wird. Diese eingekoppelte modulierte Schwingung weist den Vorteil auf, dass einzelne Störquellen eliminiert werden können, um eine sichere Detektion der Trennung oder Verhakung des Werkstückteils zum Restwerkstück zu ermöglichen. Durch eine Anregung im Bereich der zum Beispiel ermittelten Eigenfrequenz des Systems kann die Effizienz der Detektion zudem erhöht werden.

Des Weiteren ist bevorzugt vorgesehen, dass nach Einkopplung des Körperschalls durch den Impulsgeber in das Werkstückteil oder Restwerkstück der Schwingungssensor über einen Filter, vorzugsweise einen Bandpassfilter, die Schwingungen in einem Bereich von 1 bis 3 kHz herausfiltert und mittels einer Fouriertransformation vorzugsweise aus jeweils 256 Werten aufbereitet und ein Maximum ermittelt, wobei ein Verhältnis zwischen dem Maximum und dem Referenzwert überprüft und daraufhin ein Signal ausgegeben wird, ob die vollständige Trennung gegeben ist. Dies ermöglicht nicht nur eine automatische, sondern auch eine zulässige Auswertung der Körperschallsignale, um daraufhin den Entnahmeprozess zu starten, sofern die Voraussetzungen gegeben sind, dass eine Trennung des Werkstückteils zum Restwerkstück gegeben ist.

Bevorzugt ist vorgesehen, dass beim Positionieren der Greifeinrichtung auf dem Werkstückteil der zumindest eine Impulsgeber oder der zumindest eine Schwingungssensor mit dem Werkstückteil kontaktiert wird. Dadurch kann der Entnahmeprozess weiterhin automatisiert erfolgen.

Die weitere Komponente der Sensoreinrichtung, welche nicht an der Greifeinrichtung positioniert ist, wird auf dem Restwerkstück positioniert oder an oder auf einer Maschinenkomponente, die mit dem Restwerkstück zur Körperschallübertragung gekoppelt und verbunden ist. Beispielsweise kann die weitere Maschinenkomponente die Klemmeinrichtung, die Handhabungseinrichtung, die Werkstückauflage oder weiteren Maschinenkomponenten sein. Dies weist den Vorteil auf, dass vorhandene Maschinenkomponenten oder Maschinenachsen verwendet werden, um den Impulsgeber oder den Schwingungssensor aufzunehmen. Bei der Klemmeinrichtung kann beispielsweise vorgesehen sein, dass der Impulsgeber oder der Schwingungssensor an der verfahrbaren Komponente der Handhabungseinrichtung vorgesehen ist oder an zumindest einer Pratze bzw. der Klemmeinrichtung. Dadurch können die Komponenten der Sensoreinrichtung fest in der Bearbeitungsmaschine verbaut sein, so dass der bisherige Automatisierungsprozess für die Bearbeitung des plattenförmigen Werkstücks weiter aufrechterhalten und durchgeführt werden kann.

Die der Erfindung zugrundeliegende Aufgabe wird des Weiteren durch ein Datenverarbeitungsprogramm für eine Maschinensteuerung einer Bearbeitungsmaschine, insbesondere einer Laserschneidmaschine oder einer Laserstanzmaschine, gelöst, welches die Bearbeitungsmaschine zur Durchführung des vorbeschriebenen Verfahrens ansteuert. Dadurch kann die Detektion des zu entnehmenden Werkstückteils von dem Restwerkstück mittels Körperschall unmittelbar in den Automatisierungsprozess integriert werden.

Die der Erfindung zugrundeliegende Aufgabe wird des Weiteren durch eine Bearbeitungsmaschine zu Herstellung von Werkstückteilen aus einem plattenförmigen Werkstück gelöst, welches eine Werkstückauflage umfasst, auf welcher das plattenförmige Werkstück positionierbar ist, sowie ein Bearbeitungskopf, durch welchen aus dem plattenförmigen Werkstück durch trennende Bearbeitung das zumindest eine Werkstückteil gebildet wird und mit einer Klemmeinrichtung zum Greifen des auf der Werkstückauflage positionierten plattenförmigen Werkstücks sowie mit einer Greifeinrichtung zur Entnahme des Werkstückteils aus einem nach der trennenden Bearbeitung gebildeten Werkstückteils, wobei vor der Entnahme des Werkstückteils aus dem Restwerkstück die Trennung durch ein Verfahren nach einem der vorbeschriebenen Ausführungsformen mit einer Sensoreinrichtung nach einem der vorbeschriebenen Ausführungsformen detektierbar ist. Dadurch kann im Automatisierungsprozess rechtzeitig eine mögliche Störung erkannt werden, welche aufgrund von Fehlschnitten, Verschweißen, Verkanten, Verhaken oder dergleichen gegeben sein kann.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer ersten Ausführungsform einer Bearbeitungsmaschine,
Figur 2 eine perspektivische Ansicht einer alternativen Ausführungsform der Bearbeitungsmaschine zu Figur 1,
Figur 3 eine perspektivische Ansicht einer Handlingseinrichtung mit einer Greifeinrichtung zumindest zur Entnahme von Werkstückteilen,
Figur 4 eine schematische Ansicht von unten auf eine Saugplatte einer einen Vakuumsauger aufweisenden Greifvorrichtung,
Figur 5 eine schematische Seitenansicht einer am Werkstückteil angreifenden Greifeinrichtung mit einer Sensoreinrichtung,
Figur 6 eine schematische Seitenansicht der an dem Werkstückteil angreifenden Greifeinrichtung mit der Sensoreinrichtung bei Erkennung einer Störung,
Figur 7 eine schematische Ansicht einer alternativen Ausführungsform zu Figur 5, und
Figur 8 eine schematische Seitenansicht einer alternativen Ausführungsform zu Figur 5.

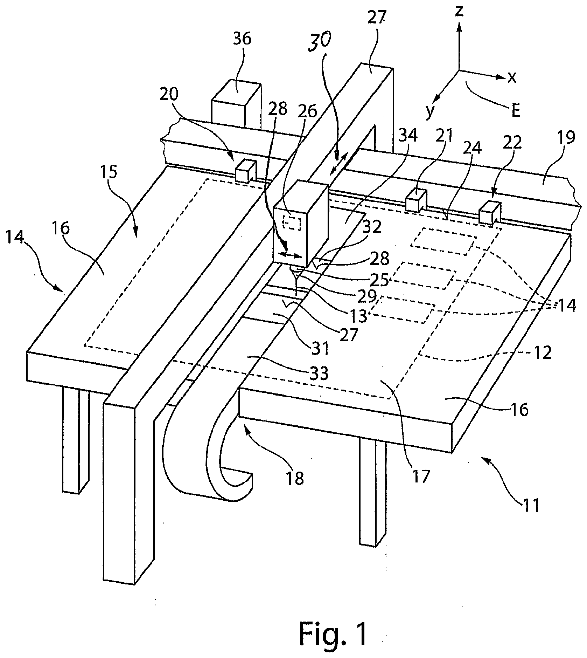

In Figur 1 ist beispielhaft eine Bearbeitungsmaschine 11 zur Herstellung von Werkstückteilen 14 aus einem plattenförmigen Werkstück 12 dargestellt. Die Herstellung der Werkstückteile 14 aus dem plattenförmigen Werkstück 12 erfolgt durch eine trennende Bearbeitung, insbesondere mittels eines Prozessstrahles 13. Die Bearbeitungsmaschine 11 kann als eine Laserbearbeitungsmaschine zum Laserschneiden von Werkstückteilen 14 mit einem Laserstrahl als Prozessstrahl 13 ausgebildet sein. Zur schneidenden Bearbeitung der Werkstückteile 14 kann der Prozessstrahl 13 auch ein Plasmastrahl sein.

Das plattenförmige Werkstück 12 liegt bei der Bearbeitung auf einer Werkstückauflage 15 auf, welche beispielsweise aus zwei benachbart zueinander angeordneten Werkstückauflageflächen 16 gebildet ist, die unter Bildung eines Spaltes 18 beabstandet sind. Die Werkstückauflage 15 umfasst eine Auflageebene E, welche einer XY-Ebene des in Figur 1 dargestellten XYZ-Koordinatensystems entspricht.

Mittels einer Handhabungseinrichtung 19, welche einen nicht näher dargestellten Antrieb umfasst, werden mehrere Klemmeinrichtungen 20, 21, 22, 23 angesteuert. Durch die Klemmeinrichtungen 20, 21, 22, 23 kann das plattenförmige Werkstück 12 auf der Werkstückauflage 15 in einer Bewegungsrichtung X verschoben und an eine vorgegebene Bearbeitungsposition bewegt werden. Die Klemmeinrichtungen 20, 21, 22, 23 sind bevorzugt als Spannpratzen, oder Klemmpratzen ausgebildet, die entlang einer Seitenkante 24 des plattenförmigen Werkstücks 12 angreifen. Alternativ kann auch vorgesehen sein, dass zur Bewegung oder Unterstützung der Bewegung des plattenförmigen Werkstücks 12 in X-Richtung die Werkstückauflage 15 selbst als Bewegungseinrichtung ausgestaltet ist, beispielsweise in Form eines oder mehrerer umlaufender Förderbänder, wie dies in der DE 10 2011 051 170 A1 der Anmelderin beschrieben ist.

Der zwischen den Werkstückauflageflächen 16 der Werkstückauflage 15 liegende Spalt 18 erstreckt sich in Y-Richtung vorzugsweise über den gesamten Verfahrweg eines Bearbeitungskopfes 25, der den Prozessstrahl 13 auf das plattenförmige Werkstück 12 ausrichtet und fokussiert. Der Bearbeitungskopf 25 ist mittels eines als Bewegungseinrichtung dienenden angetriebenen Schlittens 26 an einem feststehenden Portal 27 geführt. Der Bearbeitungskopf 25 ist oberhalb des Spaltes 18 in Y-Richtung verfahrbar angesteuert. Der Bearbeitungskopf 25 kann im dargestellten Beispiel innerhalb des Spaltes 18 zusätzlich auch in X-Richtung gesteuert verfahrbar sein. Hierzu kann der Schlitten 26 mit einer zusätzlichen Bewegungseinrichtung 28, beispielsweise in Form eines Linearantriebs, in X-Richtung gesteuert verfahren werden. Mit Hilfe der aufeinander aufbauenden Bewegungseinrichtungen 28, 30 kann der Bearbeitungskopf 25 sowohl in X-Richtung als auch in Y-Richtung in einer gewünschten Schneidposition innerhalb des Spaltes 18 positioniert werden. Gegebenenfalls kann der Bearbeitungskopf 25 auch entlang einer dritten Bewegungsrichtung (Z-Richtung) verschoben werden, um den Abstand zwischen einer Bearbeitungsdüse 29 des Bearbeitungskopfes 25 und der Werkstückoberfläche einzustellen.

Innerhalb des Spaltes 18 sind zwei Unterstützungsschlitten 31, 32 angeordnet, die sich jeweils über die Breite des Spaltes 18 erstrecken und im Spalt in Y-Richtung gesteuert sowie unabhängig voneinander verfahrbar sind. Am jeweiligen zum Prozessstrahl 13 entfernten Ende der Unterstützungsschlitten 31, 32 ist jeweils ein Überdeckungselement 33, 34 vorgesehen, durch welches der Spalt 18 geschlossen ist. Der Prozessstrahl 13 wird durch eine Strahlquelle 36, insbesondere einer Laserquelle, erzeugt und mittels einer nicht näher dargestellten Strahlführung dem Bearbeitungskopf 25 zugeführt und über diesen ausgegeben.

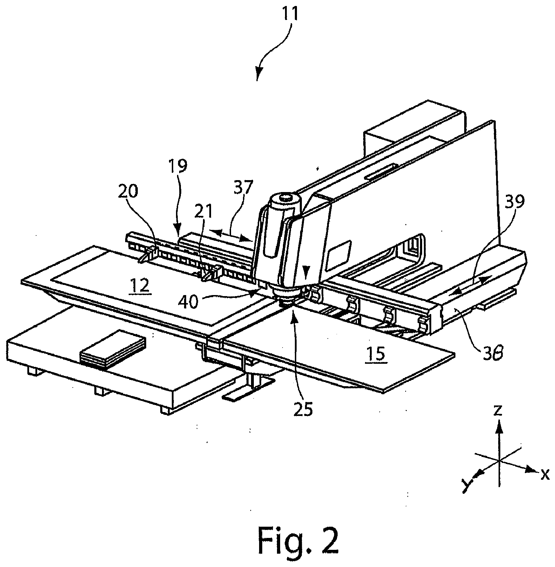

In Figur 2 ist eine alternative Ausführungsform einer Bearbeitungsmaschine 11 dargestellt. Diese Bearbeitungsmaschine 11 ist beispielsweise als eine Laser-Stanzmaschine ausgebildet. Zur trennenden Bearbeitung eines plattenförmigen Werkstücks 12 ist ein Stanzkopf 40 mit einem nicht näher dargestellten Stanzstempel und ein Bearbeitungskopf 25 vorgesehen. Das zu bearbeitende Werkstück 12 liegt ebenfalls während der Werkstückbearbeitung auf einer Werkstückauflage 15 auf. Das Werkstück 12 wird während der Bearbeitung mit der Handhabungseinrichtung 19, welche Klemmeinrichtungen 20, 21 aufweist, gehalten und kann gegenüber dem Stanzkopf 40 und dem Bearbeitungskopf 25 in der X-Richtung der Werkstückebene (X-/Y-Ebene) mittels eines durch einen Pfeil angeordneten konventionellen Linearantrieb 37 verfahren werden. In Y-Richtung der Werkstückebene kann das Werkstück 12 zusätzlich bewegt werden, indem die Werkstückauflage 15 zusammen mit der Handhabungseinrichtung 19 relativ zu einer Unterlage 38, auf welcher die Werkstückauflage 15 gelagert ist, mittels eines durch einen Pfeil angedeuteten weiteren Linearantriebs 39 verfahren werden.

Das plattenförmige Werkstück 12 lässt sich auf diese Weise in X- und Y-Richtung gegenüber einem ortsfesten Bearbeitungsbereich des Stanzkopfes 40 und einem ortsfesten Bearbeitungsbereich an dem Bearbeitungskopf 25 verschieben.

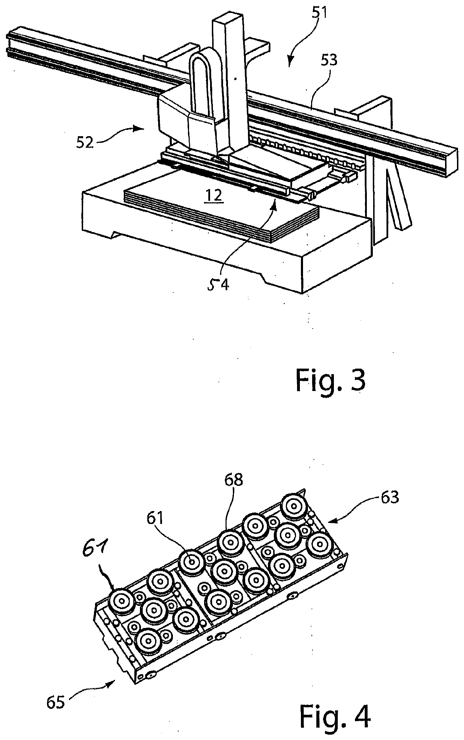

In Figur 3 ist perspektivisch eine Handlingseinrichtung 51 dargestellt, welche eine Greifeinrichtung 52 umfasst, die entlang zumindest einer Linearachse 53 verfahrbar ist. Diese Handlingseinrichtung 51 kann sowohl der Bearbeitungsmaschine 11 gemäß Figur 1 als auch der in Figur 2 zugeordnet sein. Dadurch ist ermöglicht, dass mittels der Greifeinrichtung 52 aus einem Magazin ein unbearbeitetes plattenförmiges Werkstück 12 auf der Werkstückauflage 15 zu deren Bearbeitung positioniert wird. Dabei werden durch trennende Bearbeitung Werkstückteile 14 hergestellt. Ein Restwerkstück 17 bzw. ein Restgitter verbleibt. Zur Entnahme der Werkstückteile 14 können wiederum die Greifeinrichtung 52 angesteuert werden, um aus dem Restwerkstück 17 die einzelnen Werkstückteile 14 zu entnehmen und an einem weiteren Magazin abzulegen. Das Restwerkstück 17 kann ebenfalls durch die Greifeinrichtung 52 entnommen und einer Abfallstation zugeführt werden.

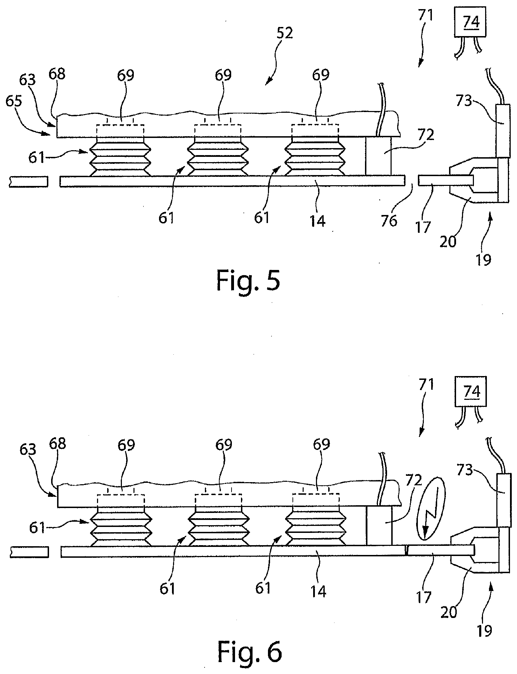

Die Greifeinrichtung 52 kann beispielsweise als Magnetsauger, Vakuumsauger, Elektroadhäsionssauger oder als mechanischer Greifer ausgebildet sein. Im Ausführungsbeispiel gemäß Figur 4 ist schematisch ein Vakuumsauger 65 dargestellt, der an einem Saugrahmen 54, welcher ein oder mehrere Saugplatten 63 umfasst, angeordnet. An jeder Saugplatte 63 sind mehrere Saugelemente 61 vorgesehen. Jedes dieser Saugelemente 61 dient als Entnahmesauger. Ein solches Saugelement 61 kann aus einem elastischen Kunststoff bestehenden Balg bzw. Faltenbalg ausgebildet sein. Die Saugplatte 63 des Vakuumsaugers 65 ist bevorzugt über eine Schlauchleitung mit einer Vakuumpumpe verbunden. Zur einzelnen Ansteuerung der Saugelemente 61 werden Ventile 69 (Figur 5) angesteuert. Die Anzahl der Vakuumsauger 65 sowie die Größe der Saugelemente 61 als auch deren Anordnung in Zeilen und Spalten oder einem sonstigen Raster ist beliebig und kann an die jeweilige Handhabungsaufgabe angepasst werden.

In Figur 5 ist eine schematische Seitenansicht der Greifvorrichtung 52 dargestellt, welche in einer Greifposition zum Werkstückteil 14 positioniert ist. Die Saugelemente 61 können nur aufliegen oder bereits mit Vakuum beaufschlagt sein, so dass das Werkstückteil 14 fest mit den Saugelementen 61 der Greifeinrichtung 52 verbunden ist.

Zur Detektion einer Trennung des Werkstückteils 14 zum Restwerkstück 17 durch einen Schneidspalt 76 mittels Körperschall ist eine Sensoreinrichtung 71 vorgesehen. Diese Sensoreinrichtung 71 umfasst zumindest einen Impulsgeber 72 und zumindest einen Schwingungssensor 73, welche mit einer Steuer- und Auswerteeinrichtung 74 verbunden sind. Gemäß dieser ersten Ausführungsform in Figur 5 ist vorgesehen, dass der Impulsgeber 72 an der Greifeinrichtung 52 angeordnet ist. Dieser Impulsgeber 72 kann benachbart zu den Saugelementen 61 am Gehäuse 68 der Greifeinrichtung 52 vorgesehen sind. Dabei wird der Impulsgeber 72 derart am Gehäuse 68 fixiert, dass beim Positionieren der Greifeinrichtung 52 in einer Greifposition zum Werkstückteil 14 der Impulsgeber 72 auf der Oberfläche des Werkstückteils 14 aufliegt bzw. daran anliegt.

Der zumindest eine Schwingungssensor 73 ist an einer Maschinenkomponente der Bearbeitungsmaschine 11 vorgesehen. Beispielsweise kann dieser unmittelbar auf einer Klemmeinrichtung 20 oder auch an der Handhabungseinrichtung 19 befestigt sein. Die Klemmeinrichtung 20 nimmt das Restwerkstück 17 auf.

Das Werkstückteil 14 ist gemäß dem Ausführungsbeispiel in Figur 5 vollständig durch den Schneidspalt 76 getrennt zum Restwerkstück 17 angeordnet.

Zur Detektion einer möglichen Störung bei der Entnahme des Werkstückteils 14 aus dem Restwerkstück 17, beispielsweise durch Fehlschnitte, Verschweißen, Verkanten, Verhaken oder dergleichen, wird eine Detektion durch die Sensoreinrichtung 71 durchgeführt. Die Steuer- und Auswerteeinrichtung 74 gibt Signale an den Impulsgeber 72 aus, so dass durch den Impulsgeber 72 Körperschallschwingungen in das Werkstücksteil 14 eingekoppelt werden. Durch den zumindest einen Schwingungssensor 73 werden die eingekoppelten Körperschallschwingungen erfasst und wieder an die Steuer- und Auswerteeinrichtung 74 weitergeleitet.

Aufgrund der vollständigen Trennung des Werkstückteils 14 zum Restwerkstück 17 durch den Schneidspalt 76 wird keine Körperschallschwingung oder nur ein sehr geringer Anteil an Körperschallschwingungen über die Werkstückauflage 15 übertragen. Dadurch wird durch die Steuer- und Auswerteeinrichtung 74 ein Signal detektiert, dass kein Kontakt zwischen dem Werkstückteil 14 und dem Restwerkstück 17 gegeben ist und der Entnahmeprozess durch die Greifeinrichtung 52 gestartet werden kann. Vorzugsweise wird die Greifeinrichtung 52 entlang der Z-Achse zunächst vertikal nach oben bewegt, bis das angehobene Werkstückteil 14 gegenüber dem Restwerkstück 17 freikommt, um danach eine weitere Verfahrbewegung anzusteuern.

In Figur 6 ist eine schematische Seitenansicht eines Werkstückteils 14 zu einem Restwerkstück 17 dargestellt, bei welcher das Werkstückteil 14 zumindest in einem Bereich an dem Restwerkstück 17 anliegt. Bei der Durchführung der Detektion wird wiederum über den Impulsgeber 72 Körperschall in das Werkstückteil 14 eingekoppelt. Aufgrund der zumindest bereichsweisen Kontaktierung des Werkstückteils 14 zum Restwerkstück 17 wird ein größerer Anteil an Körperschallschwingungen auf das Restwerkstück 17 übertragen, welches diese Körperschallschwingungen über die Klemmeinrichtung 20 an die Handhabungseinrichtung 19 überträgt, so dass der Schwingungssensor 73 die Körperschallschwingungen detektieren kann. Aus dem Anteil der detektierten Körperschallschwingungen kann zunächst erfasst werden, dass das Werkstückteil 14 nicht vollständig frei gegenüber dem Restwerkstück 17 ist. Sofern der erfasste Anteil der Körperschallschwingungen unterhalb eines vorbestimmten Schwellwertes oder eines Referenzwertes ist, kann detektiert werden, dass nur eine Berührung vorliegt und der Entnahmeprozess durch die Greifeinrichtung 52 gestartet werden kann. Sofern der Anteil der Körperschallschwingungen, der durch den zumindest einen Schwingungssensor 73 erfasst wird, höher ist als ein Referenzwert oder ein Schwellwert, wird eine Störung festgestellt. Daraufhin kann eine Lösestrategie mittels der Greifeinrichtung 52 gestartet werden oder die Maschine stillgesetzt werden, so dass ein manueller Eingriff durch ein Bedienpersonal erfolgt.

Vor der Durchführung einer Detektion bezüglich der Trennung des Werkstückteils 14 zum Restwerkstück 17 kann in der Steuer- und Auswerteeinrichtung 74 ein Referenzwert abgelegt werden. Dieser Referenzwert wird bei einer sich im Betrieb befindlichen Bearbeitungsmaschine 11 durch Messungen erfasst, wobei sichergestellt ist, dass eine vollständige Trennung des Werkstückteils 14 zum Restwerkstück 17 gegeben ist. Zwischen dem Werkstückteil 14 und dem Restwerkstück 17 ist ein vollständig umlaufender Schneidspalt 76 ausgebildet. Ausgehend von diesem Referenzwert können weitere Positionen des Werkstückteils 14 zum Restwerkstück 17 simuliert und Referenzwerte erfasst werden. Dadurch kann zu einem späteren Zeitpunkt eine Auswahl getroffen werden, ob der Entnahmeprozess noch gestartet wird oder es zu Störungen während des Entnahmeprozesses kommen kann.

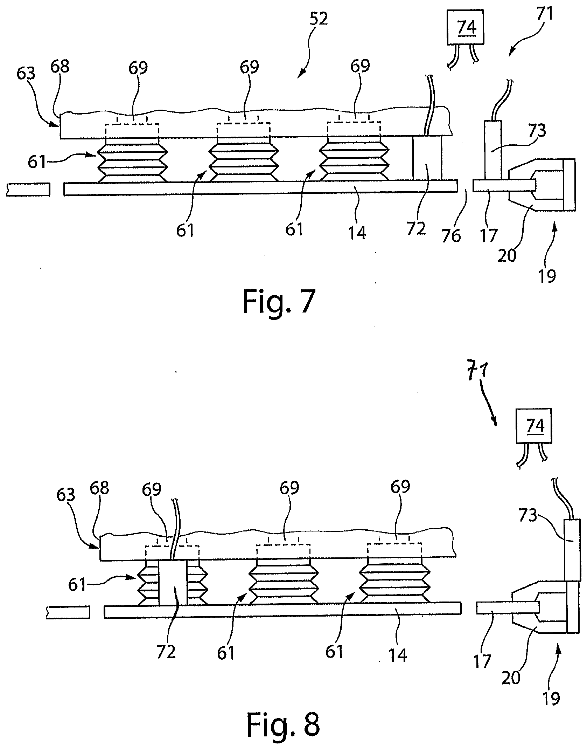

In Figur 7 ist eine alternative Ausführungsform zur Durchführung des Verfahrens zur Detektion der Anordnung des Werkstückteils 14 zum Restwerkstück 17 dargestellt. Bei dieser Ausführungsform ist vorgesehen, dass beispielsweise der zumindest eine Schwingungssensor 73 unmittelbar auf dem Restwerkstück 17 positioniert ist. Der zumindest eine Impulsgeber 72 kann in Analogie zur vorbeschriebenen Ausführungsform an der Greifeinrichtung 52 positioniert sein.

In Figur 8 ist eine weitere alternative Anordnung der Sensoreinrichtung 71 vorgesehen. Bei dieser Ausführungsform ist beispielsweise der Impulsgeber 72 in einem Saugelement 61 integriert, also innerhalb des Saugelementes 61 positioniert. Der Schwingungssensor 73 kann beispielsweise an der Handhabungseinrichtung 19 vorgesehen sein.

Des Weiteren kann vorgesehen sein, dass zumindest ein Impulsgeber 72 innerhalb des zumindest einen Saugelementes 61 und zumindest einen Impulsgeber 72 außerhalb eines Vakuumsaugers 65 am Gehäuse 63 vorgesehen ist. Die Position des zumindest einen Schwingungssensors 73 kann ebenso variabel ausgestaltet werden und wahlweise am Restwerkstück 17 an der oder den Klemmeinrichtung 20, 21, 22, 23 und/oder der Handhabungseinrichtung 19 vorgesehen sein.

Die vorbeschriebenen Ausführungsformen zur Anordnung der Sensoreinrichtung 71 können ebenfalls eine vertauschte Anordnung des zumindest einen Impulsgebers 72 und des zumindest einen Schwingungssensors 73 umfassen.

## Patentansprüche

1. Verfahren zur Entnahme eines Werkstückteils (14) aus einem Restwerkstück (17), welches durch trennende Bearbeitung aus einem plattenförmigen, auf einer Werkstückauflage (15) aufliegenden Werkstück (12) gebildet wird,
- bei dem das plattenförmige Werkstück (12) zum Bearbeiten mittels einer Klemmeinrichtung (20, 21, 22, 23) fixiert wird und entlang zumindest einer X- oder Y-Richtung in einer Auflageebene der Werkstückauflage (15) verfahrbar ist,
- bei der vor oder nach dem Trennen des Werkstückteils (14) aus dem plattenförmigen Werkstück (12) eine Greifeinrichtung (52) zum Werkstückteil (14) in eine Entnahmeposition positioniert wird,
- bei dem zumindest ein Greifelement oder Saugelement (61) der Greifeinrichtung (52) an dem Werkstückteil (14) angreift,
**dadurch gekennzeichnet,**
- **dass** vor der Ansteuerung der Greifeinrichtung (52) zur Entnahme des Werkstückteils (14) aus dem Restwerkstück (17) eine Sensoreinrichtung (71) aktiviert wird, durch welche die Trennung des wenigstens einen Werkstückteils (14) zum Restwerkstück (17) mittels Körperschallschwingungen detektiert wird.

2. Verfahren nach Anspruch 1, **dadurch gekennzeichnet, dass** die Sensoreinrichtung (71) zumindest einen Impulsgeber (72) zur Erzeugung eines Körperschalls umfasst, durch welchen das Werkstückteil (14) oder das Restwerkstück (17) angeregt wird und zumindest einen Schwingungssensor (73) zur Erfassung der Körperschallschwingungen umfasst, durch welche ein Anteil der über einen Schneidspalt (76) übertragenen Körperschallschwingungen zum Restwerkstück (17) oder Werkstückteil (14) ermittelt wird.

3. Verfahren nach Anspruch 1 oder 2, **dadurch gekennzeichnet, dass** zunächst zumindest eine Referenzmessung bei einem vollständig getrennten Werkstückteil (14) zum Restwerkstück (17) im Betrieb eine Bearbeitungsmaschine (11) durchgeführt wird und von den aus der Referenzmessung ermittelten Daten ein Referenzwert gebildet wird.

4. Verfahren nach Anspruch 3, **dadurch gekennzeichnet, dass** die Entnahme des Werkstückteils (14) aus dem Restwerkstück (17), vorzugsweise durch eine Hubbewegung der Greifeinrichtung (52) senkrecht zur Werkstückauflage (15) nach oben, gestartet wird, sobald der erfasste Messwert der Sensoreinrichtung (71) gleich oder unterhalb des Referenzwertes liegt.

5. Verfahren nach Anspruch 4, **dadurch gekennzeichnet, dass** während der Werkstückentnahme eine Messwerterfassung erfolgt.

6. Verfahren nach Anspruch 5, **dadurch gekennzeichnet, dass** anstelle der Hubbewegung der Greifvorrichtung (52) zur Entnahme des Werkstückteils (14) eine Verfahrbewegung der Greifvorrichtung (52) für eine Lösestrategie des Werkstückteils (14) zum Restwerkstück (17) eingeleitet wird, sobald der erfasste Messwert oberhalb des Referenzwertes liegt.

7. Verfahren nach einem der vorhergehenden Ansprüche, **dadurch gekennzeichnet, dass** durch den zumindest einen Schwingungssensor (73) die durch den Impulsgeber (72) angeregte Frequenz und Amplitude erfasst werden, und vorzugsweise durch den Impulsgeber (72) eine frequenzmodulierte und/oder pulsmodulierte Schwingung in einem Bereich von 1 bis 3 kHz in das Werkstückteil (14) oder das Restwerkstück (17) eingekoppelt wird.

8. Verfahren nach Anspruch 7, **dadurch gekennzeichnet, dass** durch den zumindest einen Schwingungssensor (73) über einen Filter, insbesondere Bandpassfilter, Schwingungen im Bereich von 1 bis 3 kHz herausgefiltert werden, welche mittels einer Fouriertransformation aufbereitet und ein Maximum ermittelt wird und das Verhältnis zwischen dem Maximum und einem Referenzwert überprüft wird und anschließend ein Signal durch die Steuer- und Auswerteeinrichtung (74) ausgegeben wird, durch welches die Greifvorrichtung (52) zur Durchführung des Entnahmevorgangs oder der Lösestrategie angesteuert oder ein Stillstand der Bearbeitungsmaschine (11) angesteuert wird.

9. Verfahren nach einem der vorhergehenden Ansprüche, **dadurch gekennzeichnet, dass** beim Positionieren der Greifvorrichtung (52) auf dem Werkstückteil (14) der zumindest eine Impulsgeber (72) oder der zumindest eine Schwingungssensor (73) mit dem Werkstückteil (14) kontaktiert wird.

10. Verfahren nach einem der vorhergehenden Ansprüche, **dadurch gekennzeichnet, dass** der zumindest eine Schwingungssensor (73) oder der zumindest eine Impulsgeber (72) an Bauteilkomponenten der Bearbeitungsmaschine (11), insbesondere der Klemmeinrichtungen (20, 21, 22, 23), der Handhabungseinrichtung (19) oder an einer Werkstückauflage (15) positioniert, fixiert ist oder direkt auf das Restwerkstück (17) aufgesetzt wird.

11. Datenverarbeitungsprogramm für eine Maschinensteuerung einer Bearbeitungsmaschine (11), insbesondere einer Laserschneidmaschine oder einer Stanz-Laserschneidmaschine, mit einer Werkstückauflage (15), mit Klemmeinrichtungen (20, 21, 22, 23) zum Greifen eines auf der Werkstückauflage (15) positionierten plattenförmigen Werkstücks (12) und mit einer Strahlquelle (36) zur Erzeugung eines Prozessstrahls (13), der über einen Bearbeitungskopf (25) auf das plattenförmige Werkstück (12) gerichtet wird, **dadurch gekennzeichnet, dass** durch das Datenverarbeitungsprogramm die Bearbeitungsmaschine (11) zur Durchführung des Verfahrens nach einem der Ansprüche 1 bis 10 ansteuerbar ist.

12. Bearbeitungsmaschine zur Herstellung von Werkstückteilen (14) aus einem plattenförmigen Werkstück (12)
- mit einer Werkstückauflage (15), auf welcher das plattenförmige Werkstück (12) positionierbar ist,
- mit einem Bearbeitungskopf (25), mittels dem aus dem plattenförmigen Werkstück (12) zur trennenden Bearbeitung das zumindest eine Werkstückteil (14) gebildet wird,
- mit zumindest einer Klemmeinrichtung (20, 21, 22, 23) zum Greifen des auf der Werkstückauflage (15) positionierten plattenförmigen Werkstücks (12),
- mit einer Greifeinrichtung (52) zur Entnahme des zumindest einen Werkstückteils (14) aus dem nach der trennen-den Bearbeitung des plattenförmigen Werkstücks (12) gebildeten Restwerkstück (17),
**dadurch gekennzeichnet,**
- **dass** die Bearbeitungsmaschine eine Sensoreinrichtung (71) aufweist,
- mit zumindest einem Impulsgeber (72), welcher auf einer anzuregenden Komponente positioniert ist und mit zumindest einem Schwingungssensor (73), der auf einer durch einen Schneidspalt (76) benachbarten Komponente positioniert ist,
- mit einer Steuer- und Auswerteeinrichtung (74), durch welche die Schwingung für den zumindest einen Impulsgeber (72) zur Erzeugung eines Körperschalls angesteuert und durch den Impulsgeber (72) ausgegeben wird und durch welche die durch den zumindest einen Schwingungssensor (73) erfasste Körperschallschwingung ausgewertet wird und ein Signal über den Prozesszustand ausgibt, und
- **dass** die Bearbeitungsmachine dazu konfiguriert ist, die Entnahme des zumindest einen Werkstückteils (14) aus dem Restwerkstück (17) gemäß einem Verfahren nach einem der Ansprüche 1 bis 10 durchzuführen.

## Claims

1. Method for removing a workpiece part (14) from a residual workpiece (17), which is formed by separating machining from a plate-shaped workpiece (12) resting on a workpiece support (15),
- in which the plate-shaped workpiece (12) is fixed for machining by means of a clamping device (20, 21, 22, 23) and can be moved along at least one X or Y direction in a support plane of the workpiece support (15),
- in which, before or after separating the workpiece part (14) from the plate-shaped workpiece (12), a gripping device (52) is positioned relative to the workpiece part (14) in a removal position,
- in which at least one gripping element or suction element (61) of the gripping device (52) engages the workpiece part (14),
**characterized in that**
- before the gripping device (52) is actuated to remove the workpiece part (14) from the residual workpiece (17), a sensor device (71) is activated, by means of which the separation of the at least one workpiece part (14) from the residual workpiece (17) is detected by means of structure-borne sound vibrations.

2. Method according to claim 1, **characterized in that** the sensor device (71) comprises at least one pulse generator (72) for generating a structure-borne sound, by means of which the workpiece part (14) or the residual workpiece (17) is excited, and comprises at least one vibration sensor (73) for detecting the structure-borne sound vibrations, by means of which a proportion of the structure-borne sound vibrations transmitted via a cutting gap (76) to the residual workpiece (17) or workpiece part (14) is determined.

3. Method according to claim 1 or 2, **characterized in that** at least one reference measurement is first carried out with a completely separated workpiece part (14) to the residual workpiece (17) during operation of a processing machine (11) and a reference value is formed from the data determined from the reference measurement.

4. Method according to claim 3, **characterized in that** the removal of the workpiece part (14) from the residual workpiece (17) is started, preferably by an upward lifting movement of the gripping device (52) perpendicular to the workpiece support (15), as soon as the measured value detected by the sensor device (71) is equal to or below the reference value.

5. Method according to claim 4, **characterized in that** a measured value acquisition takes place during the workpiece removal.

6. Method according to claim 5, **characterized in that**, instead of the lifting movement of the gripping device (52) for removing the workpiece part (14), a traversing movement of the gripping device (52) for a release strategy of the workpiece part (14) to the residual workpiece (17) is initiated as soon as the detected measured value is above the reference value.

7. Method according to one of the preceding claims, **characterized in that** the frequency and amplitude excited by the pulse generator (72) are detected by the at least one vibration sensor (73), and preferably a frequency-modulated and/or pulse-modulated vibration in a range from 1 to 3 kHz is coupled into the workpiece part (14) or the residual workpiece (17) by the pulse generator (72).

8. Method according to claim 7, **characterized in that** vibrations in the range from 1 to 3 kHz are filtered out by the at least one vibration sensor (73) via a filter, in particular a bandpass filter, which vibrations are processed by means of a Fourier transformation and a maximum is determined and the ratio between the maximum and a reference value is checked and then a signal is output by the control and evaluation device (74), by means of which signal the gripping device (52) is actuated to carry out the removal operation or the release strategy or a standstill of the processing machine (11) is actuated.

9. Method according to one of the preceding claims, **characterized in that**, when the gripping device (52) is positioned on the workpiece part (14), the at least one pulse generator (72) or the at least one vibration sensor (73) is contacted with the workpiece part (14).

10. Method according to one of the preceding claims, **characterized in that** the at least one vibration sensor (73) or the at least one pulse generator (72) is positioned or fixed on component parts of the processing machine (11), in particular the clamping devices (20, 21, 22, 23), the handling device (19) or on a workpiece support (15), or is placed directly on the residual workpiece (17).

11. Data processing program for a machine control of a processing machine (11), in particular a laser cutting machine or a punch laser cutting machine, with a workpiece support (15), with clamping devices (20, 21, 22, 23) for gripping a plate-shaped workpiece (12) positioned on the workpiece support (15) and with a beam source (36) for generating a process beam (13), which is directed onto the plate-shaped workpiece (12) via a processing head (25), **characterized in that** the processing machine (11) can be controlled by the data processing program to carry out the method according to one of claims 1 to 10.

12. Processing machine for producing workpiece parts (14) from a plate-shaped workpiece (12)
- with a workpiece support (15) on which the plate-shaped workpiece (12) can be positioned,
- with a processing head (25), by means of which the at least one workpiece part (14) is formed from the plate-shaped workpiece (12) for separating processing,
- with at least one clamping device (20, 21, 22, 23) for gripping the plate-shaped workpiece (12) positioned on the workpiece support (15),
- with a gripping device (52) for removing the at least one workpiece part (14) from the residual workpiece (17) formed after the separating machining of the plate-shaped workpiece (12),
**characterized in that**
- **in that** the processing machine has a sensor device (71),
- with at least one pulse generator (72), which is positioned on a component to be excited, and with at least one vibration sensor (73), which is positioned on a component adjacent through a cutting gap (76),
- with a control and evaluation device (74), by means of which the vibration for the at least one pulse generator (72) for generating a structure-borne sound is controlled and output by the pulse generator (72) and by means of which the structure-borne sound vibration detected by the at least one vibration sensor (73) is evaluated and outputs a signal about the process state, and
- **in that** the processing machine is configured to perform the removal of the at least one workpiece part (14) from the residual workpiece (17) in accordance with a method according to one of claims 1 to 10.

## Revendications

1. Procédé d'enlèvement d'une partie (14) de pièce à partir d'une pièce restante (17) qui est formée par usinage de séparation à partir d'une pièce à usiner (12) en forme de plaque reposant sur un support d'une pièce (15),
- dans lequel la pièce à usiner en forme de plaque (12) est fixée pour l'usinage à l'aide d'un dispositif de serrage (20, 21, 22, 23) et peut être déplacée le long d'au moins une direction X ou Y dans un plan d'appui du support d'une partie de pièce (15),
- dans lequel, avant ou après la séparation de la partie de pièce (14) en forme de plaque (12), un dispositif de préhension (52) est positionné vers la partie de pièce (14) dans une position de prélèvement,
- dans lequel au moins un élément de préhension ou élément d'aspiration (61) du dispositif de préhension (52) s'engage sur la partie de pièce (14),
**caractérisé en ce que**
- qu'avant l'activation du dispositif de préhension (52) pour retirer la partie de pièce (14) de la pièce restante (17), un dispositif capteur (71) est activé, grâce auquel la séparation de là au moins une partie de pièce (14) de la pièce restante (17) est détectée au moyen de vibrations acoustiques.

2. Procédé selon la revendication 1, **caractérisé en ce que** le dispositif capteur (71) comprend au moins un générateur d'impulsions (72) pour produire un bruit de structure, grâce auquel la partie de pièce (14) ou la partie d'une pièce restante (17) est excitée, et au moins un capteur de vibrations (73) pour détecter les vibrations acoustiques de structure, grâce auquel une partie des vibrations acoustiques de structure transmises par une fente de coupe (76) à la pièce restante (17) ou à la partie d'une partie de pièce (14) est déterminée.

3. Procédé selon la revendication 1 ou 2, **caractérisé en ce qu'**au moins une mesure de référence est d'abord effectuée sur une partie de pièce (14) complètement séparée de la partie d'une pièce restante (17) pendant le fonctionnement d'une machine d'usinage (11) et qu'une valeur de référence est formée à partir des données déterminées à partir de la mesure de référence.

4. Procédé selon la revendication 3, **caractérisé en ce que** le retrait de la partie de pièce (14) de la partie d'une pièce restante (17), de préférence par un mouvement de levage du dispositif de préhension (52) perpendiculairement au support de pièce (15) vers le haut, est lancé dès que la valeur de mesure enregistrée par le dispositif capteur (71) est égale ou inférieure à la valeur de référence.

5. Procédé selon la revendication 4, **caractérisé en ce qu'**une mesure de la valeur est effectuée pendant le retrait de la pièce.

6. Procédé selon la revendication 5, **caractérisé en ce qu'**au lieu du mouvement de levage du dispositif de préhension (52) pour retirer la partie de pièce (14), un mouvement de déplacement du dispositif de préhension (52) est déclenché pour une stratégie de dégagement de la partie de pièce (14) vers la partie d'une pièce restante (17) dès que la valeur mesurée enregistrée est supérieure à la valeur de référence.

7. Procédé selon l'une des revendications précédentes, **caractérisé en ce que** le ou les capteurs de vibrations (73) détectent la fréquence et l'amplitude excitées par le générateur d'impulsions (72), et de préférence, une vibration modulée en fréquence et/ou modulée en impulsions dans une plage de 1 à 3 kHz est couplée dans la pièce à usiner (14) ou la pièce résiduelle (17) par le générateur d'impulsions (72).

8. Procédé selon la revendication 7, **caractérisé en ce que** le ou les capteurs de vibrations (73) filtrent, à l'aide d'un filtre, en particulier d'un filtre passe-bande, les vibrations dans la plage de 1 à 3 kHz, qui sont traitées au moyen d'une transformation de Fourier, un maximum est déterminé et le rapport entre le maximum et une valeur de référence est vérifié, puis un signal est émis par le dispositif de commande et d'évaluation (74) est émis, lequel commande le dispositif de préhension (52) pour effectuer l'opération de prélèvement ou la stratégie de desserrage ou commande l'arrêt de la machine d'usinage (11).

9. Procédé selon l'une des revendications précédentes, **caractérisé en ce que**, lors du positionnement du dispositif de préhension (52) sur la pièce (14), le ou les générateurs d'impulsions (72) ou le ou les capteurs de vibrations (73) sont mis en contact avec la pièce (14).

10. Procédé selon l'une des revendications précédentes, **caractérisé en ce que** le au moins un capteur de vibrations (73) ou le au moins un générateur d'impulsions (72) est positionné, fixé ou placé directement sur la pièce à usiner restante (17) sur des composants de la machine d'usinage (11), en particulier les dispositifs de serrage (20, 21, 22, 23), du dispositif de manipulation (19) ou sur un support de pièce (15), ou est placé directement sur la pièce restante (17).

11. Programme de traitement de données pour une commande de machine d'une machine d'usinage (11), en particulier d'une machine de découpe laser ou d'une machine de découpe laser-poinçonnage, avec un support de pièce (15), avec des dispositifs de serrage (20, 21, 22, 23) pour saisir une pièce à usiner (12) en forme de plaque positionnée sur le support de pièce (15) et avec une source de faisceaux (36) pour générer un faisceaux de traitement (13) qui est dirigé sur la pièce á usiner en forme de plaque (12) via une tête d'usinage (25), **caractérisé en ce que** le programme de traitement de données permet de commander la machine d'usinage (11) pour la mise en œuvre du procédé selon l'une des revendications 1 à 10.

12. Machine d'usinage pour la fabrication de parties de pièces (14) à partir d'une pièce à usiner en forme de plaque (12)
- avec un support de pièce (15) sur lequel la pièce à usiner en forme de plaque (12) peut être positionnée,
- avec une tête d'usinage (25) au moyen de laquelle au moins une pièce (14) est formée à partir de la pièce à usiner en forme de plaque (12) pour l'usinage de séparation,
- avec au moins un dispositif de serrage (20, 21, 22, 23) pour saisir la pièce en forme de plaque (12) positionnée sur le support de pièce (15),
- avec un dispositif de préhension (52) pour retirer là au moins une partie de pièce (14) de la pièce restante (17) formée après l'usinage de séparation de la pièce en forme de plaque (12),
**caractérisé en ce que**
- **en ce que** la machine d'usinage comporte un dispositif capteur (71),
- avec au moins un générateur d'impulsions (72) qui est positionné sur un composant à exciter et avec au moins un capteur de vibrations (73) qui est positionné sur un composant adjacent à une fente de coupe (76),
- avec un dispositif de commande et d'évaluation (74), par lequel l'oscillation est commandée pour au moins un générateur d'impulsions (72) afin de générer un bruit de structure et est émise par le générateur d'impulsions (72), et par lequel l'oscillation de bruit de structure d' , détectée par au moins un capteur d'oscillation (73), est évaluée et un signal sur l'état du processus est émis, et
- que la machine d'usinage est configurée pour effectuer le retrait de là au moins une pièce (14) de la pièce restante (17) selon un procédé selon l'une des revendications 1 à 10.
